Europäisches Patentamt

European Patent Office

Office européen des brevets

(19)

(11) Veröffentlichungsnummer: **0 343 192**
**B1**

(12) **EUROPÄISCHE PATENTSCHRIFT**

(45) Veröffentlichungstag der Patentschrift: **19.12.90**

(51) Int. Cl.⁵: **F 16 G 13/16**

(21) Anmeldenummer: **88902422.0**

(22) Anmeldetag: **25.03.88**

(86) Internationale Anmeldenummer:
**PCT/DE88/00194**

(87) Internationale Veröffentlichungsnummer:
**WO 88/07637 06.10.88 Gazette 88/22**

(54) **KETTENGLIED FUR ENERGIEZUFUHRUNGSKETTE.**

(30) Priorität: **26.03.87 DE 3709953**

(43) Veröffentlichungstag der Anmeldung:
**29.11.89 Patentblatt 89/48**

(45) Bekanntmachung des Hinweises auf die
Patenterteilung:
**19.12.90 Patentblatt 90/51**

(84) Benannte Vertragsstaaten:
**AT BE CH DE FR GB IT LI LU NL SE**

(56) Entgegenhaltungen:
**DE-A-2 134 878**
**DE-A-3 414 412**
**DE-U-8 513 491**
**DE-U-8 524 845**
**GB-A-2 007 326**

(73) Patentinhaber: **IGUS GMBH**
**Lochermühle 1**
**D-5060 Bergisch Gladbach 2 (DE)**

(72) Erfinder: **BLASE, Günter**
**Oberkülheim 10**
**D-5060 Bergisch Gladbach 2 (DE)**

(74) Vertreter: **Patentanwälte Dipl.-Ing. W. Dahlke**
**Dipl.-Ing. H.-J. Lippert**
**Frankenforster Strasse 137**
**D-5060 Bergisch Gladbach 1 (DE)**

Courier Press, Leamington Spa, England.

EP 0 343 192 B1

**Beschreibung**

Die Erfindung bezieht sich auf ein Kettenglied für eine Energiezuführungskette, das zwei durch Querstege verbundene Seitenplatten umfaßt, die zur gelenkigen Verbindung mit anschließenden Kettengliedern ausgebildet sind, und dessen durch die Seitenplatten und die Querstege umgrenzter Innenraum durch zwischen die Querstege eingelegte und senkrecht zu diesen verlaufende Trennstege und durch zwischen benachbarte Trennstege eingelegte und senkrecht zu diesen verlaufende Zwischenstege unterteilt wird.

Derartige Energiezuführungsketten dienen zur Aufnahme von Kabeln, Schläuchen und dergleichen. Die Kettenglieder sind dazu kastenförmig ausgebildet. Die gelenkige Verbindung erfolgt dadurch, daß die Seitenplatten abwechselnd mit Zapfen und kreisförmigen Öffnungen versehen sind, wobei die Zapfen eines Kettengliedes in die Vertiefungen des folgenden Kettengliedes eingreifen. Die Gelenkverbindung kann aber auch auf jede beliebige andere Weise erfolgen.

Die Verschwenkbarkeit aufeinanderfolgender Kettenglieder gegeneinander ist entweder durch Anschläge oder auf andere Weise begrenzt.

Solche Kettenglieder bekannter Energiezuführungsketten sind im allgemeinen aus thermoplastischem Kunststoff hergestellt, und zwar entweder jeweils in einem Stück oder aber aus mehreren Teilen zusammengesetzt.

Zum Stande der Technik wird die DE-C-3414 412 genannt, die eine Energieführungskette zeigt, bei der jedes Kettenglied durch Seitenplatten und Querstege gebildet ist und der durch die Seitenplatten und die Querstege umgrenzte Innenraum durch zwischen die Querstege eingelegte Zwischenstege unterteilt wird. Das ist in der genannten Druckschrift insbesondere in den Figuren 2, 6 und 7 dargestellt. Die Fig. 2 zeigt außerdem die gelenkige Verbindung der Kettenglieder.

Eine weiter Druckschrift zum Stande der Technik ist die CH-A-635175 (GB-A-2007326), die ebenfalls eine Energieführungskette mit eingelegten Trennstegen zeigt.

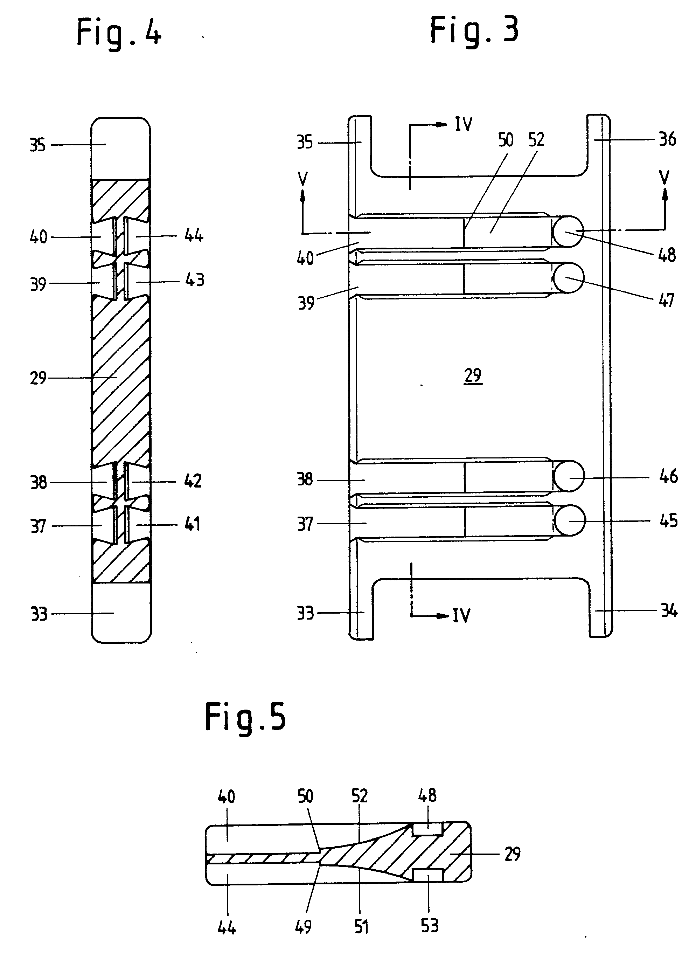

Eine weitere Druckschrift ist die DE-A-3531006 (DE-U-8524845). Die Begrenzung der Verschränkbarkeit aufeinanderfolgender Kettenglieder durch Anschläge istdort besonders aus den Figuren 4 und 5 ersichtlich.

Die Erfindung bezieht sich auf alle vorgenannten Arten von Kettengliedern für Energiezuführungsketten.

Um die eingelegten Kabel oder Schläuche geordnet von Kettenglied zu Kettenglied zu führen und diese Ordnung auch während des Betriebes aufrechtzuerhalten, ist der Innenraum jedes Kettengliedes durch die besagte Trennstege und Zwischenstege unterteilt.

Eine feste Verbindung der Trennstege mit den Querstegen, etwa in einstückiger Ausbildung, hat den Nachteil, daß man für die verschiedenen Anwendungen eine größere Anzahl verschiedener Kettenglieder bereithalten muß, wodurch sich die Herstellung und die Lagerhaltung verteuert.

Man hat deshalb auchschon vorgeschlagen, die Trennstege lose und nur durch Reibung an den Querstegen gehalten einzulegen. Das führte aber zu Störungen infolge Herausfallens einzelner Trennstege.

Der Erfindung liegt die Aufgabe zugrunde, ein Kettenglied für eine Energiezuführungskette der eingangs genannten Art so auszubilden, daß man die Lage der Trennstege zunächst frei bestimmen kann, dann aber die Trennstege in einfacher Weise in der gewünschten Position festhalten kann, ohne daß die Gefahr eines Herausfallens besteht.

Diese Aufgabe wird erfindungsgemäß dadurch gelöst, daß die als rechteckige Platten ausgebildeten Trennstege verschiebbar zwischen den Querstegen angeordnet sind und an ihren Ecken vorstehende und paarweise die Querstege gabelförmig umgreifende Stütznasen tragen, die ein Herausfallen der Trennstege verhindern, daß die Trennstege auf beiden Seiten mit einer oder mehreren, über deren Höhe verteilten und jeweils beiderseits miteinander fluchtenden Haltenuten versehen sind und daß die Zwischenstege an ihren Enden Rastnasen tragen, die jeweils wahlweise in eine der Haltenuten einschiebbar sind.

Obwohl die Trennstege eines erfindungsgemäßen Kettengliedes, wie bei den bekannten Ausführungen, kraftschlüssig von den Querstegen gehalten werden, wird durch die mit den Querstegen verbundenen Zwischenstege eine formschlüssige Verbindung erzielt, die ein unbeabsichtigtes Verlagern der Trennstege zur einen oder anderen Seitenplatte hin verhindert. Die von den Trennstegen gehaltenen Zwischenstege stützen sich nämlich, sobald der oder die Trennstege seitlich verschoben werden sollen, mit ihren freien Enden an den Seitenplatten ab und verhindern eine weitere Verschiebung.

Dabei besitzen die Trennstege an ihren Enden Stütznasen, mit denen sie jeweils den einen bzw. anderen Quersteg unterseitig gabelförmig umgreifen.

Durch die erfindungsgemäß vorgesehenen Zwischenstege werden Teilräume gebildet, die ein weitergehendes Sortieren eingelegter Kabel oder Schläuche ermöglichen.

Um den den Seitenplatten des Kettengliedes zugewandten Enden der Zwischenstege einen noch festeren Halt zu geben, ist vorzugsweise vorgesehen, daß an den Enden der Querstege ein Abschlußsteg eingelegt ist, der auf seiner der Seitenplatte anliegenden Seite eine Paßrippe aufweist, die in eine Paßnut entsprechender Form und Größe in der Seitenplatte eingreift und sich in Richtung von einem zum anderen Quersteg erstreckt. Dabei weist der Abschlußsteg auf seiner der Paßrippe gegenüberliegenden Seite eine oder mehrere, über seine Höhe verteilte Haltenuten auf, die in ihrer Höhenlage mit den Haltenuten in den Trennstegen fluchten. Durch die Paßrippe in Verbindung mit Paßnut wird ein Herausfallen des Abschlußsteges unter der Einwirkung der sich im Betrieb etwas vorund zurückbewegenden Kabel verhindert. Ein solcher Abschlußsteg wird insbesondere dann verwendet, wenn es infolge der besonderen Ausbildung der Querstege in der Nähe der Seitenplatten nicht mehr möglich ist, unmittelbar an der Seitenplatte einen Trennsteg mit Stütznasen einzulegen, der die Querstege gabelförmig umgreift.

Die Enden der Zwischenstege stützen sich dort entweder nur an dem Abschlußsteg ab oder sind von diesem Abschlußsteg gehalten.

Vorzugsweise werden für ein Kettenglied einer bestimmten Größe Trennstege sowie gegebenenfalls Abschlußstege entsprechend dem Abstand der Querstege des Kettengliedes voneinander bereit gehalten. Dazu können dann Zwischenstege verschiedener Länge vorrätig gehalten werden, die je nach Wunsch eine unterschiedliche Unterteilung des Innenraums ermöglichen. Um dabei den durch die beiden Seitenplatten des Kettengliedes in dieser Richtung vorbestimmten Raum voll auszunutzen, werden Zwischenstege bereit gehalten, deren unterschiedliche Längen entsprechend einem gewünschten Rastermaß bemessen sind. Man kann den Innenraum bzw. Durchlaßquerschnitt eines Kettengliedes beispielsweise in Teilräume unterteilen, deren Querabmessungen sich untereinander wie 1:2:4 oder ähnlich verhalten.

Die Rastnasen an den Enden der Zwischenstege und die diese aufnehmenden Haltenuten können in verschiedener Weise geformt sein, wobei sich eine Schwalbenschwanzform als besonders zweckmäßig erwies. Eine bevorzugte Gestaltung der Rastnasen und der Haltenuten ergibt sich aus den Unteransprüchen 5 und 6.

Vorzugsweise erstrecken sich die Rastnasen nur über einen Teil der Länge der Endflächen der Zwischenstege, und es stehen in der Nähe des anderen Endes dieser Endflächen Raststifte vor, denen Rastlöcher in den Trennstegen zur rastenden Aufnahme entsprechen.

Vorzugsweise bildet der Boden jeder Haltenut gegen deren Ende hin eine Rampe, auf der der Raststift beim Einschieben aufgleitet.

Die Erfindung wird nachstehend in Ausführungsbeispielen anhand der Zeichnung näher erläutert. Dabei zeigen:

Fig. 1 einen Schnitt durch ein Kettenglied, bestehend aus zwei Seitenplatten und zwei diese verbindenden Querstegen wobei links und rechts der strichpunktierten Mittellinie Kettenglieder verschiedener Art dargestellt sind;

Fig. 1a eine Draufsicht auf das Ende eines Quersteges für ein Kettenglied anderer Bauart, gesehen in Richtung des Pfeiles Ia in Fig. 1;

Fig. 2 einen Schnitt längs der Linie II—II in Fig. 1;

Fig. 3 eine Seitenansicht eines Trennsteges gemäß Fig. 1.

Fig. 4 einen Schnitt längs der Linie IV—IV in Fig. 3;

Fig. 5 einen Schnitt längs der Linie V—V in Fig. 3;

Fig. 6 die Stirnseite eines Zwischensteges;

Fig. 7 eine Ansicht in Richtung des Pfeiles VII in Fig 6;

Fig. 8 eine Ansicht in Richtung des Pfeiles IIX in Fig 7;

Fig. 9 eine Ansicht auf einen Abschlußsteg ähnlich der Darstellung eines Trennsteges in Fig. 3;

Fig. 10 einen Schnitt längs der Linie X—X in Fig. 9 und

Fig. 11 einen Schnitt längs der Linie XI—XI in Fig. 10.

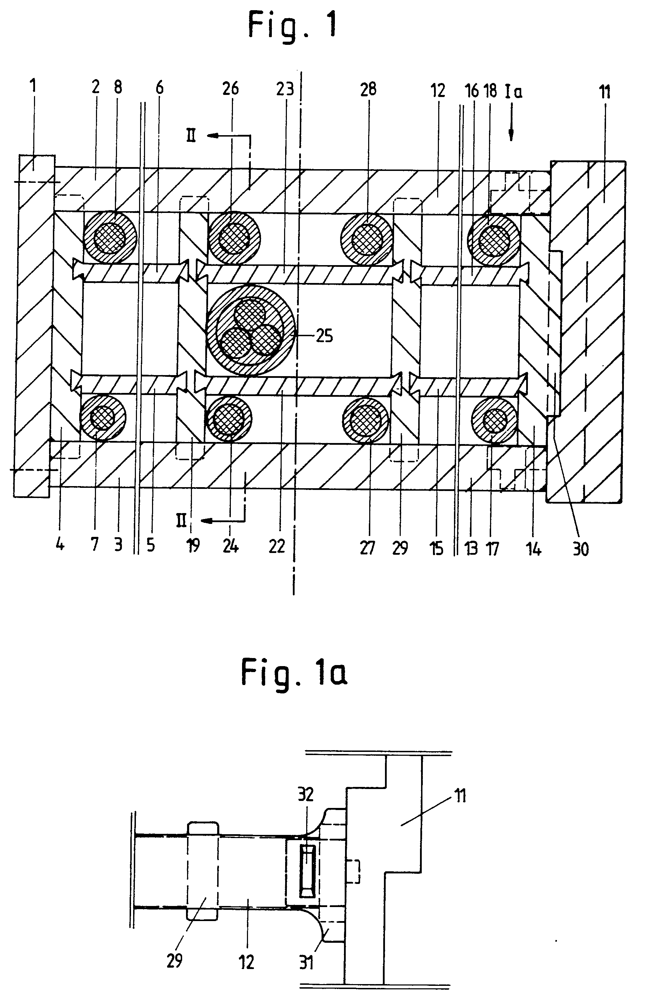

Wie schon bemerkt, ist in Fig. 1 in der linken Kälfte ein Kettenglied im Schnitt dargestellt, bei dem die Querstege 2 und 3 an ihren Enden nicht, wie bei der anderen, nachstehend zu beschreibenden Bauart, verbreitert sind. Hier kann also ein Trennsteg 4 mit endständigen Stütznasen eingelegt und bis dicht an die Seitenplatte 1 herangerückt werden.

Im Abstand von diesem Trennsteg 4 ist ein weiterer Trennsteg 19 zwischen die Querstege eingelegt. Die beiden Trennstege 4 und 19 sind durch Zwischenstege 5 und 6 mittels Schwalbenschwanzverbindungen fest miteinander verbunden. In die zwischen den beiden Trennstegen gebildeten drei Teilräume sind Kabel 7 und 8 eingelegt.

Von dem Trennsteg 19 werden auf der den Zwischenstegen 5 und 6 gegenüberliegenden Seite zwei weitere Zwischenstege 22 und 23 gehalten, die wiederum Teilräume bilden, in denen sich Kabel 24, 25 und 26 befinden.

In dieser Weise ist der gesamte Innenraum des Kettengliedes zwischen der linken und der rechten (nicht dargestellten) Seitenplatte durch Trennstege und Zwischenstege unterteilt.

Bei der rechts der strichpunktierten Mittellinie dargestellten anderen Bauart sind die Querstege 12 und 13 mittels besonderer Steckverbindungen, ohne zusätzliche Schrauben mit den Seitenplatten verbunden, von denen die rechte Seitenplatte 11 dargestellt ist. Bei dieser Bauart befindet sich zwischen den beiden Querstegen 12 und 13 ein Trennsteg 29, der durch Schwalbenschwanzverbindungen Zwischenstege 15 und 16 trägt, die sich gegen die Seitenplatte 11 hin erstrecken. Auf der gegenüberliegenden Seite der Trennplatte 29 sind ebenfalls zwei Zwischenstege angeordnet (22 und 23). In die gebildeten Teilräume zwischen diesen Zwischenstegen und den Querstegen sind Kabel 27 und 28 bzw. in der Nähe der Seitenplatte 11 Kabel 17 und 18 eingelegt.

Während der Trennsteg 29 in gleicher Weise wie die Trennstege für die ältere Bauart des Kettengliedes mit Stütznasen 33—36 (siehe Fig. 3 und 4) versehen ist, mit denen er die Querstege 12 und 13 gabelförmig umgreift, ist das aus nachstehend genannten Gründen dicht an der Seitenplatte 11 nicht mehr möglich. Wie man aus Fig. 1a erkennt, ist nämlich das Ende des Quersteges 12 (und entsprechend auch das Ende des Quersteges 13) in der Nähe der Seitenplatte 11 verbreitert (Verbreiterung 31), so daß ein Trennsteg mit Stütznasen, wie der Trennsteg 29, nicht dicht an die Seitenplatte 11 herangerückt werden könnte. Für solche Kettenglieder der anderen Bauart wird deshalb an der Seitenplatte 11 (und entsprechend auch an der gegenüberliegenden, nicht dargestellten Seitenplatte) anstelle des in der Mitte verwendeten Trennsteges ein etwas abgewandelter Abschlußsteg 14 verwendet. Dieser Abschlußsteg trägt wiederum über eine Schwalbenschwanzverbindung die Zwischenstege 15 und 16 und ist an seinen Enden kraftschlüssig zwischen dem oberen Quersteg 12 und dem unteren Quersteg 13 eingelegt. Dieser Abschlußsteg besitzt aber an seinen Enden aus den vorgenannten Gründen keine Stütznasen. Um ein Herausschieben dieses Abschlußsteges in Richtung der Längsrichtung der Kabel im Betrieb zu verhindern, ist der Abschlußsteg auf seiner der Seitenplatte 11 anliegenden Seite mit einer Paßrippe 30 versehen, die sich in Richtung von einem zum anderen Quersteg erstreckt und die in eine Paßnut entsprechender Form und Größe in der Seitenplatte 11 eingreift. Anstelle einer durchgehenden Paßrippe und entsprechenden Paßnut können selbstverständlich auch Paßstifte und Paßlöcher verwendet werden.

Auf diese Weise wird der Abschlußsteg 14 trotz der Verbreiterungen 31 der Querstege 12 und 13 unverrückbar festgehalten. In Fig. 1a ist im übrigen ein Rastvorsprung 32 am Ende eines von der Seitenplatte 11 vorstehenden Zapfens dargestellt, der in einen entsprechenden Schlitz im Quersteg 12 eingreift und die Steckverbindung zwischen Seitenplatte und Quersteg sichert.

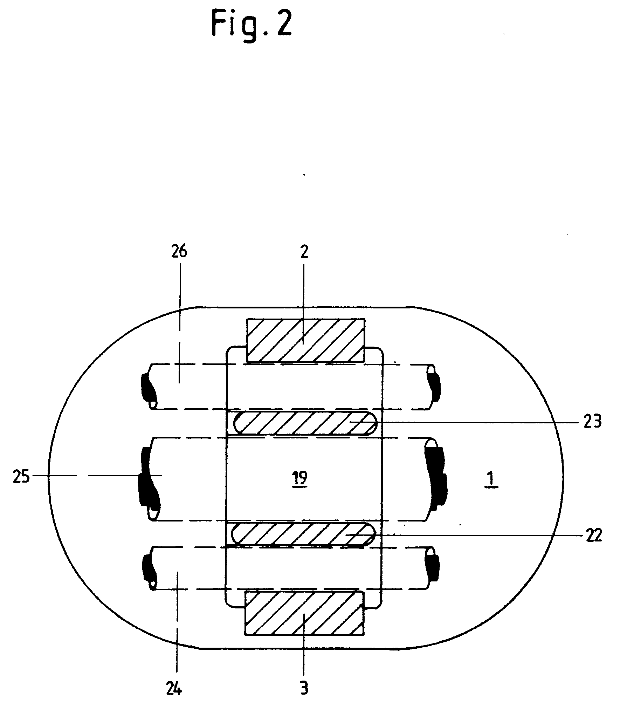

In Fig. 2 sind in vereinfachter Darstellung der Trennsteg 19, die Kabel 24, 25 und 26, die beiden Querstege 2 und 3 sowie die Zwischenstege 22 und 23 und dahinter die Seitenplatte 1 dargestellt.

Figuren 3 bis 5 zeigen einen sowohl für die eine als auch für die andere Bauart eines Kettengliedes verwendbaren Trennsteg 29 mit Stütznasen 33 bis 36, beiderseitigen, im wesentlichen schwalbenschwanzförmigen Haltenuten 37 bis 44 sowie eine besondere Ausbildung des Bodens der Haltenuten. Wie man insbesondere aus der Schnittdarstellung in Fig. 5 erkennt, erstreckt sich die Haltenut 40 bis 44 nur über einen Teil ihrer Länge, nämlich bis zu dem Absatz 4g bzw. 50, in gleicher Tiefe. Bei dem vorgenannten Absatz verringert sich die Tiefe der Haltenut um einen Bruchteil und nimmt dann längs der gekrümmten Rampenflächen 51 bzw. 52 weiterhin ab, um etwa im letzten Viertel der Gesamtbreite des Trennsteges 29 ganz auszulaufen. Hinter dem Ende dieser Nut sind dann Rastlöcher 48 bzw. 53 vorgesehen, deren Bedeutung nachstehend erläutert werden wird.

Entsprechend den Nuten 40 und 44 sind auch die übrigen Nuten 37 bis 39 und 41 bis 43 ausgebildet.

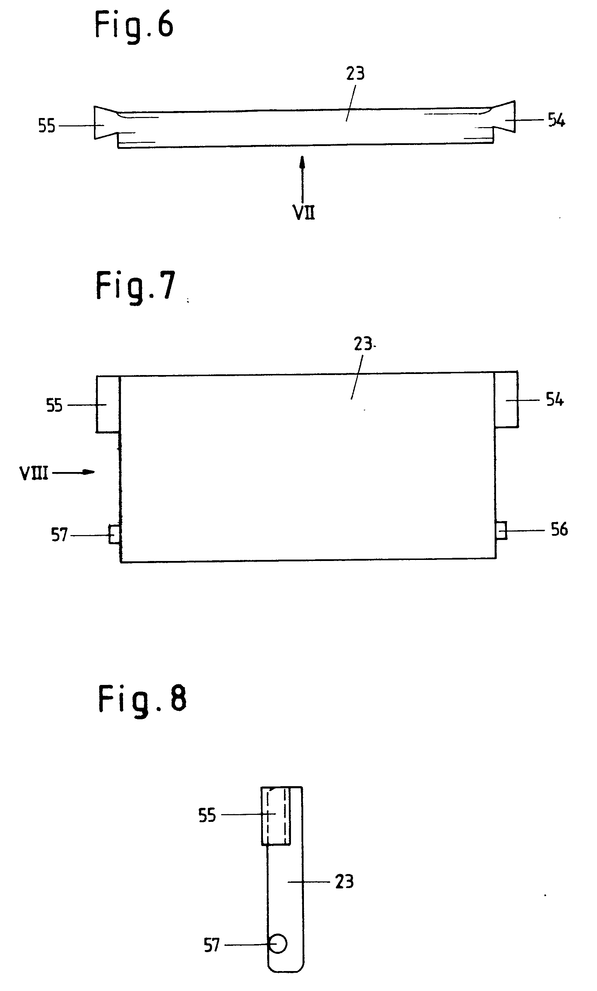

Bevor auf die von besonderer Ausbildung der Haltenuten sowie die Funktion der Rastlöcher näher eingegangen wird, wird die hierzu gehörende und in den Figuren 6 bis 8 dargestellte Form der Zwischenstege näher eingegangen.

Wie man aus Fig. 7 und Fig. 8 erkennt, erstrecken sich die Rastnasen 54 und 55 des Zwischensteges 23 nur über einen Teil der Länge der Endflächen. In der Nähe des anderen Endes dieser Endflächen stehen Raststifte 56, 57 von diesen Endflächen vor. Sowohl die Rastnasen als auch die Raststifte sind etwas aus der Mittelebene des Zwischensteges heraus versetzt.

Beim Einsetzen des Zwischensteges 23 in eine der verschiedenen Haltenuten des Trennsteges 29, beispielsweise in die Haltenut 40, wird zunächst der Raststift 56 in die Nut eingeführt. Beim weiteren Einschieben springt der Raststift 56 sodann über den Absatz 50 (Fig. 5) und gleitet längs der Rampe 52 aufwärts, bis schließlich die Rastnase 54 in die Nut 40 eingleitet. Schließlich rastet der Raststift 56 durch Ausüben eines leichten Drucks auf die Oberseite des Zwischensteges 23 in das für ihn vorgesehene Rastloch 48 ein. Der Zwischensteg 23 ist jetzt gegen Herausgleiten bzw. Herausgeschobenwerden aus der Nut 40 des Trennsteges 29 gesichert. In entsprechender Weise werden auch die anderen Zwischenstege eingesetzt und eingerastet.

Wie aus den Figuren 3 und 4 ersichtlich ist, besitzt jeder Trennsteg mehrere Haltenuten, und zwar je zwei relativ dicht nebeneinander verlaufende Haltenuten am oberen und zwei ebensolche Haltenuten am unteren Ende. Dadurch, daß die Zwischenstege in die eine oder andere dieser Haltenuten eingeschoben werden, können die Köhen der Abteilungen nach Wunsch gewählt werden. Eine Zwischenstellung wird noch durch die versetzte Lage der Rastnasen ermöglicht, indem man den Zwischensteg in der einen oder in der umgekehrten Lage einsetzt.

Wie schon erwähnt, genügt es, wenn der Abschlußsteg 4 (Fig. 1) für ein Kettenglied der anderen Bauart nur auf der dem Innenraum zugewandten Seite Haltenuten aufweist. Man kann aber hier selbstverständlich auch einen Abschlußsteg mit beiderseits angeordneten Haltenuten verwenden und vereinfacht dadurch die Lagehaltung.

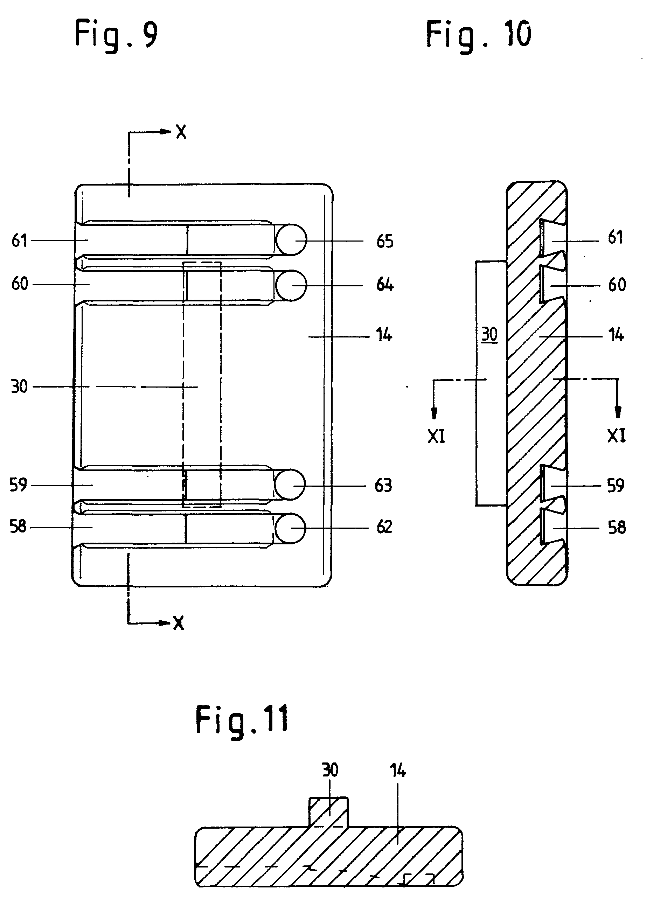

Bei dem Abschlußsteg 14 für Kettenglieder anderer Bauart ist, wie sich aus Fig. 1 sowie auch aus den Figuren 9 bis 11 ergibt, die Anordnung von Haltenuten nur auf der innenliegenden Seite sinnvoll. Diese Haltenuten 58 bis 61 (Fig. 9 und Fig. 10) sind im übrigen in gleicher Weise ausgebildet, wie die Haltenuten der Trennstege 29 bzw. 19, also so, wie in Fig. 5 für einen solchen Trennsteg dargestellt.

Auf der den Nuten gegenüberliegenden Fläche des Abschlußsteges 14 steht von diesem, etwa in dessen Mitte, eine Paßrippe 30 vor, die beim Zusammensetzen des Kettengliedes von einer Paßnut entsprechender Form und Größe in der benachbarten Seitenplatte 11 aufgenommen wird.

Das Zusammensetzen eines Kettengliedes geschieht in folgender Weise:

Nachdem die Seitenwände mit den Querstegen zusammengesetzt, also entweder verschraubt oder bei Kettenglieder dieser Bauart zusammengesteckt sind, wird an jeder der beiden Seitenplatten zwischen den Querstegen ein Abschlußsteg eingesetzt und dicht an die Seitenplatte herangeschoben. Dabei greift bei einem Abschlußsteg für ein Kettenglied neuerer Bauart die Paßrippe 30 in die entsprechende Paßnut ein.

Sodann wird zwischen den beiden Seitenplatten die gewünschte Anzahl von Trennstegen zwischen die Querstege eingesetzt, indem diese Trennstege zunächst unter einem schiefen Winkel eingeführt und dann in die Endlager eingedreht werden.

Schließlich werden, nachdem die Trennstege längs der Querstege in ihrer gewünschte Position verschoben sind, die Zwischenstege, mit ihren Rastnasen voran, in die entsprechenden Haltenuten der Trennstege bzw. der Abschlußstege eingeschoben und mittels der Raststifte und Rastlöcher verrastet.

Sämtliche Teile des Kettengliedes bilden nunmehr eine starre unlösbare Einheit. Ein Trennen der einzelnen Einlagen ist dadurch möglich, daß bei jedem Zwischensteg die Raststifte durch leichten Druck aus ihren Rastlöchern entfernt und die Trennstege dann wieder herausgezogen werden.

## Patentansprüche

1. Kettenglied für Energiezuführungskette, das zwei durch Querstaege (2, 3; 12, 13) verbundene Seitenplatten (1, 11) umfaßt, die zur gelenkigen Verbindung mit anschließenden Kettengliedern ausgebildet sind, und dessen durch die Seitenplatten und die Querstege umgrenzter Innenraum durch zwischen die Querstege eingelegt und senkrecht zu diesen verlaufende Trennstege (4, 19, 29) und durch zwischen benachbarte Trennstege eingelegte und senkrecht zu diesen verlaufende Zwischenstege (5, 6; 22, 23) unterteilt sind, dadurch gekennzeichnet, daß die als Platten ausgebildeen Trennstege (4, 19, 29) verschiebbar zwischen den Querstegen (2, 3; 12, 13) angeordnet sind und an ihren Ecken vorstehende und paarweise die Querstege gabelförmig umgreifende Stütznasen (33, 34, 35, 36) tragen, die ein Herausfallen der Trennstege verhindern, daß die Trennstege (4, 19, 29) auf beiden Seiten mit einer oder mehreren, über deren Höhe verteilten und jeweils beiderseits miteinander fluchtenden Haltenuten (37—44) versehen sind und daß die Zwischenstege (5, 6; 22, 23) an ihren Enden Rastnasen (54, 55) tragen, die jeweils wahlweise in eine der Haltenuten einschiebbar sind.

2. Kettenglied nach Anspruch 1, dadurch gekennzeichnet, daß an den Enden der Querstege ein Abschlußsteg (14) eingelegt ist, der auf seiner der Seitenplatte (11) anliegenden Seite eine Paßrippe (30) aufweist, die in eine Paßnut entsprechender Form und Größe in der Seitenplatte eingreift und sich in Richtung von einem zum anderen Quersteg erstreckt, und daß der Abschlußsteg (14) auf seiner der Paßrippe (30) gegenüberliegenden Seite eine oder mehrere, über seine Höhe verteilte Haltenuten (58—61) aufweist, die in ihrer Höhenlage mit den Haltenuten (37—44) in den Trennstegen (4, 19, 29) fluchten.

3. Kettenglied nach Anspruch 1, dadurch gekennzeichnet, daß sich die Rastnasen (54, 55) nur über einen Teil der Länge der Endflächen der Zwischenstege (5, 6; 22, 23) erstrecken, daß in der Nähe des anderen Endes der Endflächen Raststifte (56, 57) von diesen Endflächen vorstehen und daß in den Trennstegen (19, 29) hinter den Enden der Haltenuten Rastlöcher (45, 46, 47, 48) zur rastenden Aufnahme der Raststifte vorgesehen sind.

4. Kettenglied nach Anspruch 3, dadurch gekennzeichnet, daß der Boden jeder Haltenut (37—40) gegen deren Ende hin eine den Raststift (56, 57) in das Rastloch (48, 53) einführende Rampe (51, 52) bildet.

## Revendications

1. Maillon de chaîne pour chaîne d'amenée d'énergie, qui comporte deux plaques (1, 11) latérales liées par des barres (2, 3; 12, 13) transversales, qui sont faites de façon à permettre la liaison articulaire avec les maillons de chaîne suivants, et dont l'espace intérieur formé par les plaques latérales et les barres transversales est divisé par des barres de séparation (4, 19, 29), disposées entre les barres transversales et orthogonales à celles-ci, et par des barres intermédiaires (5, 6; 22, 23) disposées entre les barres de séparation voisines et orthogonales à celles-ci, caractérisé par le fait que les barres de séparation (4, 19, 29) en forme de plaques sont aménagées de façon mobile entre les barres transversales (2, 3; 12, 13) et portent sur leurs coins des supports (33, 34, 35, 36) en forme de fourche entourant par paires les barres transversales, empêchant les barres de séparation de tomber, par le fait que les barres de séparation (4, 19, 29) sont munies sur les deux côtés d'un ou plusieurs crans de maintien (37—44), répartis sur leur hauteur et à chaque fois alignés sur les deux côtés, et par le fait que les barres intermédiaires (5, 6; 22, 23) portent des dents d'arrêt (54, 55) à leurs extrémités, qui sont au choix glissables dans un des crans de maintien.

2. Maillon de chaîne selon la revendication 1, caractérisé par le fait qu'aux extrémités de la barre transversale est posée une barre terminale (14) qui comporte sur le côté adossé à la plaque latérale (11), un rebord élevé (30) s'emboîtant, dans une fente d'adaptation de la plaque latérale de forme et de dimensions correspondantes, et qui s'étend en direction d'une barre transversale à l'autre, et par le fait que la barre terminale (14) dispose sur le côté opposé au rebord élevé (30) d'une ou de plusieurs fentes de maintien (58—61), réparties sur sa hauteur, qui s'alignent dans leur position en hauteur avec les fentes de maintien (37—44) dans les barres de séparation (4, 19, 29).

3. Maillon de chaîne selon la revendication 1, caractérisé par le fait que les dents d'arrêt (54, 55) s'étendent seulement sur une partie de la longueur des surfaces terminales des barres intermédiaires (5, 6; 22, 23), par le fait que s'élèvent des dents d'arrêt (56, 57) à la proximité de l'autre bout de la surface terminale de ces surfaces terminales, et par le fait que se trouvent des trous d'arrêt (45, 46, 47, 48) dans les barres de séparation (19, 29) derrière les bouts des fentes d'arrêt, destinés à recevoir les tiges d'arrêt.

4. Maillon de chaîne selon la revendication 3, caractérisé par le fait que le fond de chaque fente de maintien (37—40) forme une rampe (51, 52) en direction du bout de celle-ci, qui introduit la tige d'arrêt (56, 57) dans le trou d'arrêt (48, 53).

## Claims

1. Stud link for energy supply chains comprising two side plates 1, 11 which are connected by means of transverse bars 2, 3; 7, 13, are formed so as to produce a hinged connection with connected stud links, and of which the intermediate space, which is delimited by the side plates and the transverse bars, is divided by separating bars 4, 19, 29, inserted between the transverse bars and extending perpendicular thereto, and by intermediate bars 5, 6; 22, 23, which are inserted between adjacent separating bars and extend perpendicular thereto, characterised in that the separating bars 4, 19, 29 formed as plates are disposed displaceably between the transverse bars 2, 3; 12, 13 and bear at the corners thereof projecting support noses 33, 34, 35, 36 which surround the transverse bars in pairs and in the manner of a fork and prevent the separating bars falling out; in that the separating bars 4, 19, 29 are provided on both sides with one or a plurality of retaining grooves 37—44 which are distributed over the height thereof and in each case are flush with one another on both sides; and in that the intermediate bars 5, 6; 22, 23 bear at the ends thereof detents 54, 55 which in each case may optionally be inserted in one of the retaining grooves.

2. Stud link according to claim 1, characterised in that, at the ends of the transverse bars there is disposed a closure bar 14 which comprises on its side adjacent the side plate 11 an adaptor rib 30 which engages in an adaptor groove having a corresponding shape and size in the side plate, and extends in the direction from one transverse bar to the other; and in that the closure bar 14 comprises on the side thereof lying opposite the adaptor rib 30 one or a plurality of retaining grooves 58—61 which are distributed over the height thereof and are aligned with the retaining grooves 37—44 in the separating bars 4, 19, 29 in their vertical position.

3. Stud link according to claim 1, characterised in that the detents 54, 55 only extend over part of the length of the end surfaces of the intermediate bars 5, 6; 22, 23; in that in the vicinity of the other end of the end surfaces, engagement pins 56, 57 project from the said end surfaces; and in that engagement holes 45, 46, 47, 48 are provided in the separating bars 19, 29 behind the ends of the retaining grooves in order to accommodate the engagement pins in a locking manner.

4. Stud link according to claim 3, characterised in that the base of each retaining groove 37—40 forms towards the end thereof a slope 51, 52 introducing the engagement pin 56, 57 into the engagement hole 48, 53.

# Fig. 1

# Fig. 1a

# Fig. 2

# Fig.4

# Fig. 3

# Fig.5

## Fig.6

## Fig.7

## Fig.8

## Fig. 9

## Fig. 10

## Fig. 11